Europäisches Patentamt

European Patent Office

Office européen des brevets

(19)

(11) Numéro de publication: **0 214 000**
**B1**

(12) ## FASCICULE DE BREVET EUROPEEN

(45) Date de publication du fascicule du brevet:
**25.01.89**

(51) Int. Cl.⁴: **F16D 13/75**

(21) Numéro de dépôt: **86401627.4**

(22) Date de dépôt: **21.07.86**

(54) **Compensateur automatique d'usure pour embrayage de véhicule automobile.**

(30) Priorité: **26.07.85 FR 8511498**

(43) Date de publication de la demande:
**11.03.87 Bulletin 87/11**

(45) Mention de la délivrance du brevet:
**25.01.89 Bulletin 89/4**

(84) Etats contractants désignés:
**DE FR GB IT**

(56) Documents cités:
**DE-A- 2 317 209**
**FR-A- 2 422 998**
**GB-A- 590 962**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Hauguel, Fabrice Jean Nicolas, 13, allée Vercingétorix, F-95250 Beauchamp(FR)**

(74) Mandataire: **Moncheny, Michel, c/o Cabinet Lavoix 2 Place d'Estienne d'Orves, F-75441 Paris Cedex 09(FR)**

## Description

La présente invention concerne un compensateur automatique d'usure pour embrayage de véhicule automobile.

Il est connu que les manœuvres de débrayage successives effectuées au cours de la conduite d'un véhicule automobile usent peu à peu les garnitures à friction du disque d'embrayage, ce qui entraîne un déplacement progressif du point de fixation du câble d'embrayage sur le mécanisme d'embrayage et par conséquent de la pédale d'embrayage en position de repos. Cette dernière montre progressivement à partir de sa position initiale d'une distance pouvant atteindre plusieurs centimètres et il s'ensuit un certain inconfort pour le conducteur du véhicule.

On connaît, dans les brevets DE-A 2 317 209 et GB-A 590 962 des compensateurs qui comportent un corps cylindrique rempli d'un fluide hydraulique et un piston susceptible de coulisser axialement à l'intérieur dudit corps.

On connaît également dans le FR-A 2 422 998 un compensateur d'usure placé entre le mécanisme d'embrayage et le câble d'embrayage d'un véhicule. Ce compensateur comporte un cylindre suivant dans ses déplacements la butée de débrayage du mécanisme d'embrayage et susceptible de coulisser axialement sur un tube accouplé à la pédale par l'intermédiaire du câble d'embrayage. Le cylindre est rempli d'un liquide hydraulique et séparé en deux chambres communiquant entre elles par un conduit limiteur de débit de manière qu'en dehors des manœuvres d'embrayage, le cylindre se déplace par rapport au tube d'une distance qui compense l'usure des garnitures à friction, la pression du fluide dans les deux chambres étant équilibrée par une circulation par ledit conduit.

Toutefois, un compensateur tel que décrit ci-dessus présente des inconvénients. En particulier, au cours des manœuvres de débrayage, pendant la transmission de l'effort exercé par le conducteur du tube au cylindre, il se produit un léger écoulement intempestif de fluide d'une chambre à l'autre, ce qui entraîne un léger déplacement relatif du cylindre et du tube et donc de la pédale qui ne correspond pas à une compensation de l'usure des garnitures à friction.

L'invention remédie aux inconvénients précités. Elle a pour but un compensateur automatique d'usure à amortissement hydraulique pour un embrayage de véhicule automobile, comportant au moins un élément accouplé au mécanisme d'embrayage et un élément accouplé à un levier de commande de débrayage sur lequel une force est exercée à chaque manœuvre de débrayage, l'un desdits éléments étant constitué par un corps cylindrique rempli d'un fluide hydraulique et l'autre desdits éléments étant constitué par un piston, les deux éléments étant susceptibles de coulisser lentement l'un par rapport à l'autre en dehors des manœuvres de débrayage pour compenser le jeu dû à l'usure dans le mécanisme d'embrayage, dans lequel le lent coulissement des deux éléments compense exactement l'usure dans le mécanisme de débrayage et qui soit simple à réaliser et à monter sur un embrayage de véhicule.

Dans ce but, à l'intérieur du corps cylindrique est susceptible de coulisser axialement une douille dans laquelle est susceptible de coulisser axialement le piston et dont le fond est percé d'un conduit annulaire faisant communiquer un espace se trouvant à l'intérieur de la douille avec un espace compris entre le corps et la douille, ledit corps étant fermé par un couvercle comportant une paroi souple délimitant d'une part avec le piston un espace et d'autre part avec le fond dudit couvercle une chambre remplie d'air et ledit fond de la douille étant maintenu éloigné du fond du corps par des moyens élastiques en dehors des manœuvres de débrayage afin de permettre un lent déplacement du piston correspondant à l'usure de l'embrayage, mais s'appliquant contre le corps à chaque manœuvre de débrayage afin d'éviter tout écoulement de fluide par le conduit annulaire pendant ladite manœuvre, et qu'un conduit annulaire entourant la douille fait communiquer l'espace compris entre le corps et la douille avec l'espace compris entre le piston et la paroi souple.

D'autres caractéristiques de l'invention apparaîtront à la lecture de la description d'un mode de réalisation préféré, donné uniquement à titre d'exemple et représenté par les dessins annexés.

La figure 1 est une vue de côté et en coupe partielle d'un embrayage de véhicule automobile muni d'un compensateur automatique d'usure selon l'invention.

La figure 2 est une vue de détail à plus grande échelle montrant le montage du compensateur d'usure sur l'embrayage.

La figure 3 est une coupe longitudinale à plus grande échelle du compensateur d'usure de la figure 1.

La figure 4 est une vue identique à la figure 1 montrant une autre disposition du compensateur automatique d'usure.

La figure 5 est une coupe longitudinale à plus grande échelle du compensateur d'usure de la figure 4.

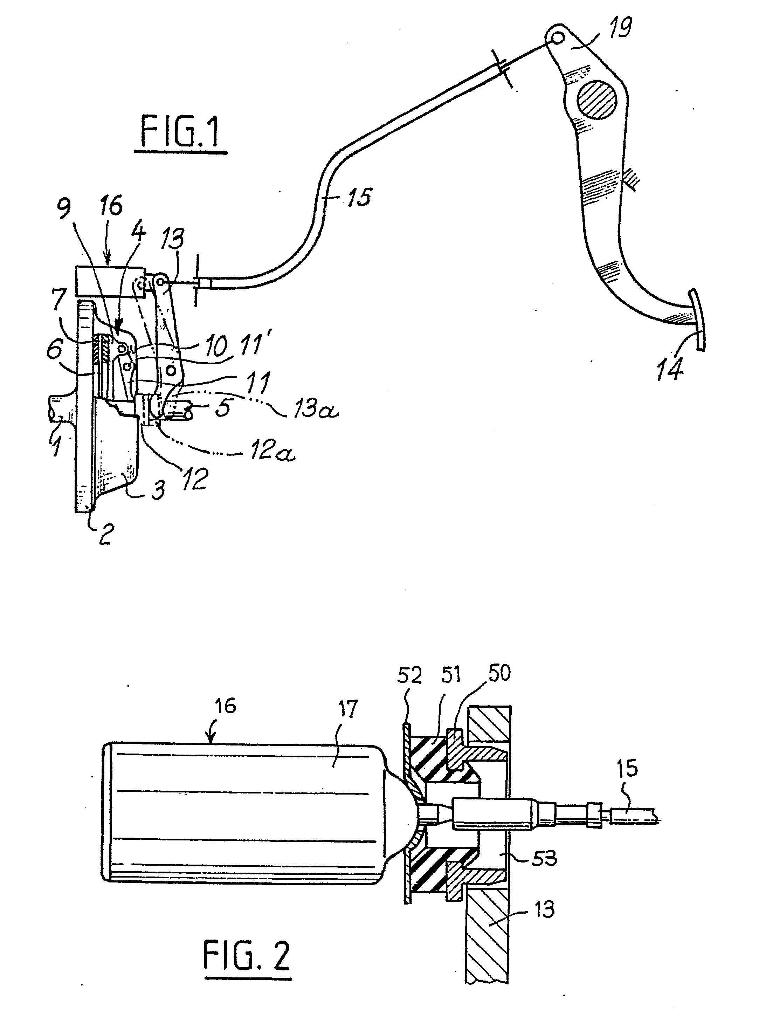

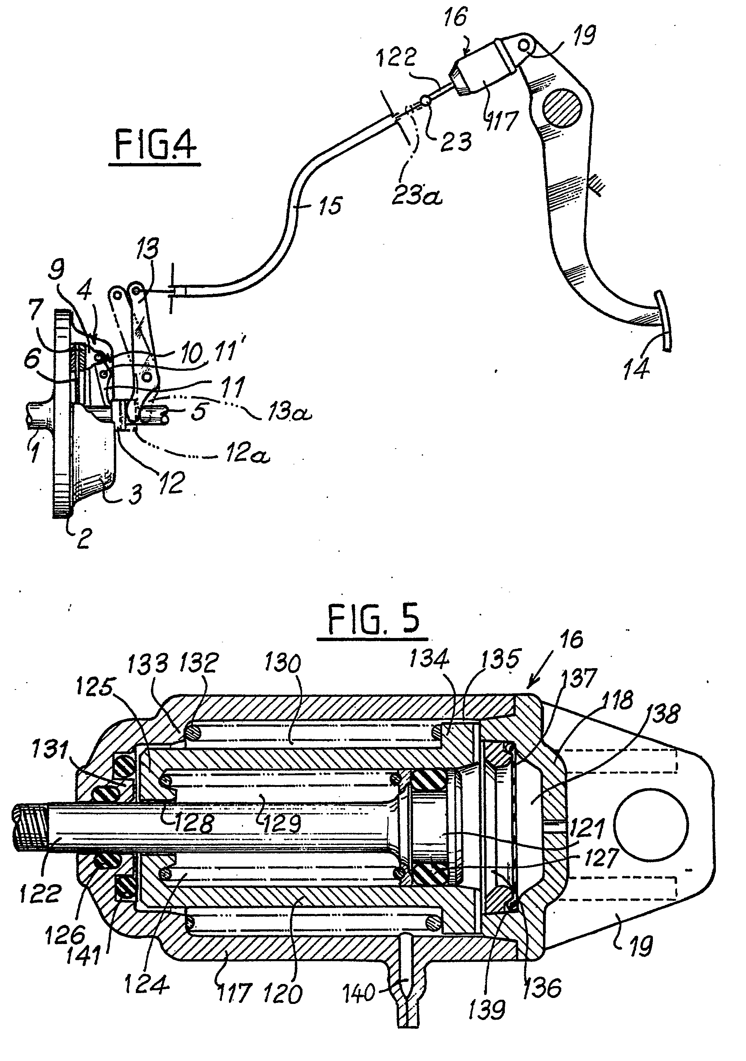

L'embrayage représenté sur les figures 1 et 4 comporte, de façon classique, un vilebrequin 1 de moteur accouplé avec un volant 2 sur lequel est fixée une cloche d'embrayage 3. La cloche d'embrayage 3 contient un mécanisme d'embrayage désigné globalement par 4 et qui commande le désaccouplement entre le vilebrequin 1 et un arbre primaire 5 d'une boîte de vitesses, non représentée.

Le mécanisme d'embrayage 4 comporte un disque d'embrayage 6 dont les deux faces portent des garnitures à friction 7 et qui est accouplé à l'arbre primaire 5 de la boîte de vitesses. Le disque d'embrayage 6 est serré entre le volant 2 et un plateau de pression 9 par des ressorts 10 qui prennent appui sur le fond de la cloche d'embrayage 3.

Des leviers 11 sont fixés par l'une de leurs extrémités au plateau de pression 9 tandis que leur deuxième extrémité prend appui sur une butée de débrayage 12 mobile supportée par l'arbre primaire 5 de la boîte de vitesses. Ces leviers 11 peuvent pivoter autour d'axes 11', à l'encontre des ressorts 10 pour dégager le plateau de pression 9 du disque d'embrayage 6, désaccouplant ainsi le vilebrequin 1 de l'arbre primaire 5. Le pivotement des leviers 11 est provoqué par les mouvements de translation de la butée de débrayage 12 le long de l'arbre 5, eux-mêmes provoqués par le pivotement d'une fourchette 13 qui s'appuie contre la butée de débrayage 12 et est accouplée à la pédale de débrayage 14 par l'intermédiaire d'un câble 15.

Dans le mode de réalisation tel que représenté sur la figure 1, le compensateur d'usure selon l'invention, repéré par 16, est placé au-delà de la fourchette 13 par rapport au câble 15.

Ce compensateur d'usure 16 est constitué d'un corps cylindrique 17 qui est en appui sur la fourchette 13 par l'intermédiaire de deux bagues concentriques 50, 51 et d'une coupelle 52 (fig. 2). Les deux bagues 50, 51 et la coupelle 52 sont percées d'un orifice central 53 pour le passage du câble 15.

Le corps cylindrique 17 rempli d'un fluide hydraulique est fermé par un couvercle 18 par exemple par vissage ou par clippage. Une douille 20 est susceptible de coulisser axialement à l'intérieur du corps 17 alors qu'un piston 21 prolongé par une tige 22 fixée au câble 15 est lui-même susceptible de se déplacer axialement à l'intérieur de la douille 20 à l'encontre d'un ressort 24 en appui sur le fond 25 de la douille 20 et sur le piston 21.

L'étanchéité est assurée d'une part entre le corps cylindrique 17 et la tige 22 du piston 21 par un joint torique 26, et d'autre part entre le piston 21 et la douille 20 par un joint torique 27.

Le fond 25 de la douille 20 est percé d'un alésage dans lequel peut coulisser la tige 22 et dont le diamètre a été prévu suffisamment grand pour constituer un conduit annulaire 28 faisant communiquer l'espace 29 se trouvant à l'intérieur de la douille 20 avec l'espace 30 compris entre le corps 17 et la douille 20.

La douille 20 est, en position de repos, maintenue éloignée du fond 31 du corps 17 par un ressort 32 qui s'appuie à l'une de ses extrémités sur le corps 17 par l'intermédiaire d'une bague 33 et à l'autre extrémité sur un épaulement 34 prévu à peu près à la moitié de la hauteur de la douille 20. Au niveau de l'épaulement 34, les diamètres respectifs de la douille 20 et du corps 17 sont prévus de façon à constituer un passage annulaire 35 faisant communiquer l'espace 30 avec l'espace 36 compris entre le piston 21 et le couvercle 18.

Le couvercle 18 est muni d'une membrane 37 qui ménage entre le fond du couvercle 18 et la membrane 37 une chambre 38 remplie d'air; cette membrane 37 peut se déformer afin de compenser les variations de volume de la chambre 38 quand le piston 21 se déplace. Un conduit 40 est prévu dans la paroi du corps 17 pour remplir celui-ci de fluide hydraulique; de préférence, le corps 17 est réalisé en matière plastique et le conduit 40 peut être facilement obturé après remplissage.

Le fonctionnement de l'embrayage décrit est le suivant: quand on appuie sur la pédale 14, le câble 15 se tend et entraîne le compensateur 16 vers la droite, quand on regarde la figure 1, ce qui fait tourner la fourchette 13 dans le sens des aiguilles d'une montre, déplace la butée de débrayage 12 vers la gauche, fait tourner le levier 11 dans le sens des aiguilles d'une montre et dégage le plateau de pression 9 du disque d'embrayage 6, désaccouplant ainsi le vilebrequin 1 de l'arbre primaire 5, c'est-à-dire produisant le débrayage.

Quand le conducteur lève le pied de la pédale 14, le câble 15 se détend, le compensateur se déplace vers la gauche permettant au levier 13, à la butée de débrayage 12 et au levier 11 de reprendre leur position de repos. Le ressort 10 repousse le plateau de pression 9 contre le disque d'embrayage 6, accouplant ainsi de nouveau le vilebrequin 1 avec l'arbre primaire 5, c'est-à-dire produisant l'embrayage.

Quand les garnitures à friction 7 de l'embrayage ont été utilisées pendant une certaine période, elles s'usent, produisant un déplacement progressif du plateau de pression 9 vers le disque d'embrayage 6, en position de repos c'est-à-dire en position embrayée. La position de repos du levier 11 se déplace en même temps dans le sens inverse des aiguilles d'une montre. La butée de débrayage 12 prend la position de repos indiquée en pointillés sur la figure 1 par 12a, tandis que la fourchette 13 prend la position de repos 13a et pousse vers la gauche le compensateur 16. Le corps 17 se déplace donc vers la gauche, entraînant sous l'action du ressort 32 la douille 20 qui coulisse sur le piston 21. Ce déplacement provoque un écoulement de fluide de l'espace 29 à l'espace 30 par le conduit annulaire 28; il s'ensuit un écoulement analogue de l'espace 30 à l'espace 36 par le passage annulaire 35. Toutefois, le volume libéré dans l'espace 36 est supérieur au volume de fluide qui s'écoule par le conduit annulaire 28 et donc au volume de fluide qui s'écoule par le conduit annulaire 35, la différence correspondant au produit de la section de la tige 22 par le déplacement du piston 21. Il s'ensuit une déformation progressive de la membrane 37, qui devient convexe, sa convexité étant tournée vers le piston 21.

Les écoulements de fluide par les conduits annulaires 28 et 35 sont bien sûr très lents, les déplacements du piston 21 s'effectuant de façon très progressive au fur et à mesure de l'usure des garnitures à friction jusqu'à ce que la pression du fluide dans les deux espaces 29 et 30 soit équilibrée. La position de repos du piston 21 ne subit bien sûr aucun déplacement et la pédale 14 garde une position de repos constante.

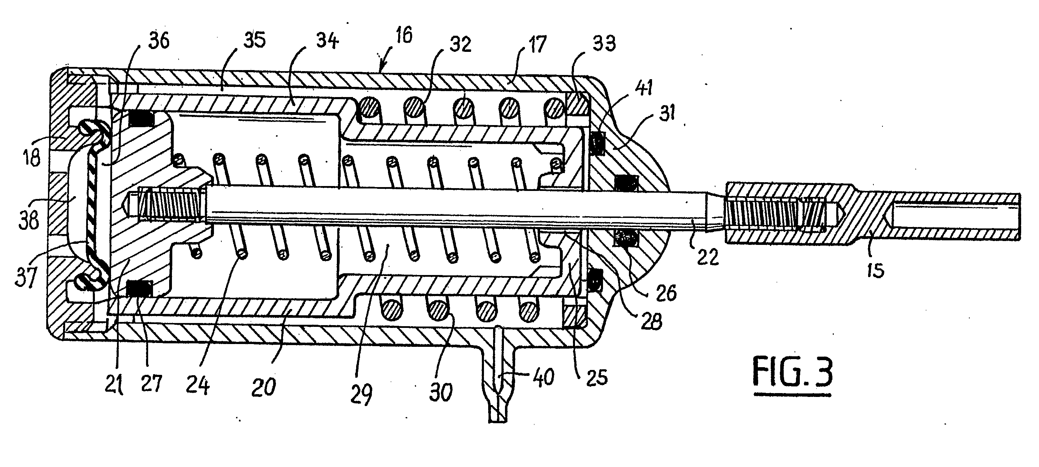

Pendant les manœuvres de débrayage, aucun écoulement intempestif de fluide ne peut se produire, car lorsque le piston 21 est déplacé vers la droite, si l'on regarde la figure 3, le fond 25 de la douille 20 vient s'appliquer contre le fond 31 du corps 17 sous l'action du ressort 24, obturant ainsi le conduit annulaire 28, l'étanchéité étant assurée par un joint torique 41.

Dans la variante représentée aux figures 4 et 5, le compensateur d'usure selon l'invention, repéré par 16, est intercalé entre le câble de débrayage 15 et la pédale 14. Ce compensateur d'usure 16 est constitué d'un corps cylindrique 117 fermé par un couvercle 118 et solidaire d'une fourchette 19 dans laquelle s'articule la pédale 14. Il comporte également une douille 120 susceptible de coulisser axialement à l'intérieur du corps 117 et un piston 121 prolongé par une tige 122 fixée au câble 15 en 23: ledit piston étant lui-même susceptible de se déplacer axialement à l'intérieur de la douille 120 à l'encontre d'un ressort 124 en appui sur le fond 125 de la douille 120 et sur le piston 121.

L'étanchéité est assurée d'une part entre le corps cylindrique 117 et la tige 122 par un joint torique 126, et d'autre part entre le piston 121 et la douille 120 par un joint torique 127.

Le fond 125 de la douille 120 est percé d'un alésage dans lequel peut coulisser la tige 122 ménageant un conduit annulaire 128 pour mettre en communication l'espace 129 avec l'espace 130.

La douille 120 est, en position de repos, maintenue éloignée du fond 131 du corps 117 par un ressort 132 qui s'appuie à l'une de ses extrémités sur un épaulement 133 prévu dans le corps 117 et à l'autre extrémité sur un épaulement 134 prévu dans la douille 120. Au niveau de l'épaulement 134, les diamètres respectifs de la douille 120 et du corps 117 sont prévus de façon à constituer un conduit annulaire 135 faisant communiquer l'espace 130 avec l'espace 136.

Le couvercle 118 est muni d'une membrane 137 qui ménage entre le fond du couvercle 118 et la membrane 137 une chambre 138 remplie d'air. L'étanchéité entre l'espace 136 et la chambre 138 est assurée par un joint torique 139 solidaire de la membrane 137. Un conduit 140, analogue au conduit 40 de la Figure 3, permet de remplir le corps 117 de fluide hydraulique.

Quand les garnitures à friction 7 ont été utilisées, elles s'usent, produisant comme dans l'exemple précédent, un déplacement de la fourchette 13 en 13a, si bien que le point de fixation du câble 15 à la tige 22 se déplace de 23 à 23a.

Le piston 121 se déplace également vers la gauche de la distance reliant les points 23 et 23a. Le déplacement du piston 121 entraîne un écoulement de fluide de l'espace 129 à l'espace 130 par le conduit annulaire 128; il s'ensuit un écoulement analogue de l'espace 130 à l'espace 136 par le conduit annulaire 135. La membrane 137 se déforme progressivement et devient convexe, sa convexité étant tournée vers le piston 121.

Les écoulements de fluide par les conduits annulaires 128 et 135 sont bien sûr très lents, les déplacements du piston 121 s'effectuant de façon très progressive au fur et à mesure de l'usure des garnitures à friction jusqu'à ce que la pression du fluide dans les deux espaces 129 et 130 soit équilibrée. La position de repos de la douille 120 et du corps 117 ne subit bien sûr aucun déplacement et la pédale 14 garde une position de repos constante.

Pendant les manœuvres de débrayage, aucun écoulement intempestif de fluide ne peut se produire, car lorsque le corps 117 est déplacé vers la droite, si l'on regarde la figure 4, le fond 125 de la douille 120 vient s'appliquer contre le fond 131 du corps 117 obturant ainsi le conduit annulaire 128, l'étanchéité étant assurée par un joint torique 141.

Le compensateur que l'on vient de décrire dans l'une ou l'autre variante présente de grands avantages.

Tout d'abord, il permet de compenser exactement l'usure des garnitures à friction, sans risque de déplacement intempestif de la position de repos du piston; il est donc très fiable et simple à réaliser. Le remplissage du corps de fluide hydraulique est très facile et une étanchéité parfaite est assurée. De plus, il peut se monter aisément sur l'embrayage d'un véhicule.

Enfin, ce compensateur d'usure permet en outre de limiter la tension maximale du câble 15 tout en maintenant toujours une précontrainte dans celui-ci, grâce au ressort 24 ou 124.

Bien entendu, l'invention n'est pas limitée aux modes de réalisation qui viennent d'être décrits.

Ainsi, pour pallier l'inconvénient lié au vide partiel qui se forme progressivement dans l'espace 36 ou 136, on peut ne pas utiliser une membrane, mais par exemple un réservoir d'huile duquel s'écoule progressivement la quantité d'huile correspondant au volume libéré par la sortie de la tige 22 ou 122.

D'autre part, le conduit annulaire 28 ou 128 peut être percé dans le fond de la douille 20 ou 120 indépendamment de l'alésage dans lequel coulisse la tige 22 ou 122; un joint est alors prévu pour assurer l'étanchéité entre le fond de la douille et la tige.

On peut envisager d'autres modes de remplissage du compensateur avec le fluide hydraulique. Par exemple, on peut assembler les différentes pièces du compensateur dans le fluide hydraulique et terminer cet assemblage par la fermeture du corps (17; 117) par le couvercle (18; 118), le conduit (40; 140) étant alors supprimé.

## Revendications

1. Compensateur automatique d'usure à amortissement hydraulique (16) pour un embrayage de véhicule automobile, comportant au moins un élément accouplé au mécanisme d'embrayage (4) et un élément accouplé à un levier de commande de débrayage (14, 19) sur lequel une force est exercée à chaque manœuvre de débrayage, l'un desdits éléments étant constitué par un corps cylindrique (17, 117) rempli d'un fluide hydraulique et l'autre desdits éléments étant constitué par un piston (21, 121) susceptible de se déplacer axialement à l'intérieur du corps cylindrique (17, 117), caractérisé en ce qu'à l'intérieur du corps cylindrique (17, 117) est susceptible de coulisser axialement une douille (20, 120) dans laquelle est susceptible de coulisser axialement le piston (21, 121) et dont le fond (25, 125) est percé d'un conduit annulaire (28, 128) faisant communiquer un espace (29, 129) se trouvant à l'intérieur de la douille (20, 120) avec un espace (30, 130) compris entre le corps (17, 117) et la douille (20, 120), ledit corps (17, 117) étant fermé par un couvercle (18, 118) comportant une paroi souple (37, 137) délimitant d'une part avec le piston (21, 121) un espace (36, 136) et d'autre part avec le fond dudit couvercle (18, 118) une chambre (38, 138) remplie d'air et ledit fond (25, 125) de la douille (20, 120) étant maintenu éloigné du fond (31, 131) du corps (17, 117) par des moyens élastiques (32, 132) en dehors des manœuvres de débrayage afin de permettre un lent déplacement du piston (21, 121) correspondant à l'usure de l'embrayage, mais s'appliquant contre le corps (17, 117) à chaque manœuvre de débrayage afin d'éviter tout écoulement de fluide par le conduit annulaire (28, 128) pendant ladite manœuvre, et qu'un conduit annulaire (35, 135) entourant la douille (20, 120) fait communiquer l'espace (30, 130) compris entre le corps (17, 117) et la douille (20, 120) avec l'espace (36, 136) compris entre le piston (21, 121) et la paroi souple (37, 137).

2. Compensateur automatique d'usure selon la revendication 1, caractérisé en ce que le conduit annulaire (35, 135) est ménagé entre un épaulement (34, 134) de la douille (20, 120) et le corps (17, 117).

3. Compensateur automatique d'usure selon la revendication 2, caractérisé en ce que l'épaulement (34) est prévu à peu près à la moitié de la hauteur de la douille (20).

**Patentansprüche**

1. Hydraulische Dämpfungsvorrichtung (16) zum automatischen Abnutzungsausgleich für die Kupplung eines Kraftfahrzeuges mit wenigstens einem Element, das mit dem Kupplungsmechanismus (4) gekoppelt ist, und einem Element, das mit einem Kupplungspedal (14, 19) gekoppelt ist, an das bei jedem Auskuppeln eine Kraft gelegt wird, wobei eines der Elemente aus einem zylindrischen Körper (17, 117) besteht, der mit einem hydraulischen Fluid gefüllt ist, und das andere Element aus einem Kolben (21, 121) besteht, das im Inneren des zylindrischen Körpers (17, 117) axial verschiebbar ist, dadurch gekennzeichnet, daß im Inneren des zylindrischen Körpers (17, 117) eine axial verschiebbare Buchse (20, 120) vorgesehen ist, in der der Kolben (21, 121) axial verschiebbar ist, und durch deren Boden (25, 125) eine Ringleitung (28, 128) gebohrt ist, die den Raum (29, 129) im Inneren der Buchse (20, 120) mit einem Raum (30, 130) verbindet, der zwischen dem Körper (17, 117) und der Buchse (20, 120) eingeschlossen ist, wobei der Körper (17, 117) durch einen Deckel (18, 118) geschlossen ist, der eine elastische Wand (37, 137) umfaßt, die einerseits mit dem Kolben (21, 121) einen Raum (36, 136) und andererseits mit dem Boden des Deckels (18, 118) eine Kammer (38, 138) begrenzt, die mit Luft gefüllt ist, und wobei der Boden (25, 125) der Buchse (20, 120) vom Boden (31, 131) des Körpers (17, 117) über elastische Einrichtungen (32, 132) außer beim Entkuppeln im Abstand gehalten wird, damit eine allmähliche Verschiebung des Kolbens (21, 121) entsprechend der Abnutzung der Kupplung möglich ist, der Boden (25, 125) jedoch am Körper (17, 117) bei jedem Entkuppeln anliegen kann, um vollständig einen Fluidstrom über die ringförmige Leitung (28, 128) während dieses Vorganges zu vermeiden, und daß eine Ringleitung (35, 135), die die Buchse (20, 120) umgibt, den Raum (30, 130) zwischen dem Körper (17, 117) und der Buchse (20, 120) mit dem Raum (36, 136) verbinden kann, der zwischen dem Kolben (21, 121) und der elastischen Wand (37, 137) eingeschlossen ist.

2. Vorrichtung zum automatischen Abnutzungsausgleich nach Anspruch 1, dadurch gekennzeichnet, daß die Ringleitung (35, 135) zwischen einem schulterförmigen Ansatz (34, 134) der Buchse (20, 120) und dem Körper (17, 117) ausgespart ist.

3. Vorrichtung zum automatischen Abnutzungsausgleich nach Anspruch 2, dadurch gekennzeichnet, daß der schulterförmige Ansatz (34) etwa auf der Hälfte der Höhe der Buchse (20) vorgesehen ist.

**Claims**

1. An automatic wear compensator having a hydraulic dashpot (16) for a motor vehicle clutch, comprising at least one element coupled to the clutch mechanism (4) and an element coupled to a declutching control lever (14, 19) on which a force is exerted for each declutching operation, one of said elements being formed by a cylindrical body (17, 117) filled with a hydraulic fluid, and the other element being formed by a piston (21, 121) adapted to slide axially inside the cylindrical body (17, 117), characterized in that slidably mounted inside the cylindrical body (17, 117) is a sleeve (20, 120) in which the piston (21, 121) can slide axially and whose end wall (25, 125) is formed with an annular conduit (28, 128) via which a space (29, 129) inside the sleeve (20, 120) communicates with a space (30, 130) lying between the cylindrical body (17, 117) and the sleeve (20, 120), the cylindrical body (17, 117) being closed by a cover (18, 118) comprising a flexible wall (37, 137) cooperating on the one hand with the piston (21, 121) to bound a space (36, 136) and on the other hand with the end wall of the cover (18, 118) to bound an air-filled chamber (38, 138), the end wall (25, 125) of the sleeve (20, 120) beeing kept away from the end wall (31, 131) of the cylindrical body (17, 117) by resilient means (32, 132) when declutching operations are not performed, so as to allow a slow displacement of the piston (21, 121) corresponding to clutch wear, but being applied against the cylindrical body (17, 117) on each declutching operation, so as to prevent any flow of fluid through the annular conduit (28, 128) during such operation, an annular conduit (35, 135) enclosing the space (30, 130) lying between the cylindrical body (17, 117) and the sleeve (20, 120) and the space (36, 136) lying between the piston (21, 121) and the flexible wall (37, 137).

2. An automatic wear compensator according to claim 1, characterized in that the annular conduit (35, 135) is provided between a shoulder (34, 134) of the sleeve (20, 120) and the cylindrical body (17, 117).

3. An automatic wear compensator according to claim 2, characterized in that the shoulder (34) is provided substantially half-way along the length of the sleeve (20).

FIG.1

FIG. 2

FIG.3

EP 0 214 000 B1

FIG.4

FIG. 5